# EUROPEAN PATENT SPECIFICATION

(11) **EP 3 478 467 B1**
(45) Date of publication and mention of the grant of the patent: **16.12.2020**
(21) Application number: 17820636.3
(22) Date of filing: 05.06.2017
(51) Int. Cl.: B27C 5/00, B27F 1/08, B27G 11/00, F16B 12/04, A47B 43/00

(54) **METHOD AND UNIT FOR MANUFACTURING A PIECE OF FURNITURE, AND A PIECE OF FURNITURE**
VERFAHREN UND EINHEIT ZUR HERSTELLUNG EINES MÖBELS UND MÖBEL
PROCÉDÉ ET UNITÉ DE FABRICATION D'UN MEUBLE ET MEUBLE

(30) Priority: 30.06.2016 SE 1650953
(43) Date of publication of application: 08.05.2019
(73) Proprietor: IKEA Supply AG, 4133 Pratteln (CH)
(72) Inventor: ANDERSSON, Benny, 343 37 Älmhult (SE); HANSSON, Jan-Anders, 272 39 Tommarp (SE)
(74) Representative: Ström & Gulliksson AB
(86) International application number: PCT/SE2017/050596
(87) International publication number: WO 2018/004417

(56) References cited:
- EP-A1- 1 364 599
- EP-A1- 1 364 599
- WO-A1-01/37705
- DE-A1- 3 333 623
- DE-A1- 4 418 274
- DE-A1- 19 804 787
- DE-A1- 19 809 606
- DE-A1-102009 050 982
- FR-A1- 2 844 166
- US-A- 3 881 794
- US-A1- 2004 045 246
- US-A1- 2004 045 246
- US-A1- 2013 170 904
- US-B1- 6 619 007

## Description

### TECHNICAL FIELD

The present invention relates to a method for manufacturing a piece of furniture and more specifically to a method for manufacturing a piece of furniture of which a first furniture panel is pre-mounted to a second furniture panel.

### BACKGROUND

For some time it is desired to facilitate the assembly of a furniture without negatively affecting handling, packaging and transports of the furniture in a flat and slim package. Today a buyer of a piece of furniture such as a wardrobe, a shelf, or a drawer, is required to perform the assembly of such furniture. In order to facilitate the assembly pre-manufacturing of some parts may be done which however also makes the package more bulky. One example of a method for manufacturing a foldable fibreboard is described in DE19804787A1. Although pre-manufactured pieces of furniture are easier to assemble into a complete product it would be desirable to provide a method for manufacturing a piece of furniture without compromising the handling, packaging or transportation of it.

### SUMMARY

An object of the present invention is to provide an improved manufacturing method. This object is achieved by a solution defined in the appended independent claims and where certain embodiment being set forth in the related dependent claims.

In a first aspect, there is provided a method for manufacturing a piece of furniture comprising a first furniture panel and at least a second furniture panel. The method comprises the steps of - arranging said first panel and said second panel adjacent to each other such that a side portion of said first panel is substantially flush with a side portion of said second panel, - milling the side portion of the first panel and the side portion of the second panel by means of at least one milling tool to form joining surfaces of the respective side portions, and - joining the side portion of the first panel and the side portion of the second panel by applying an adhesive to both joining surfaces, wherein said adhesive creates a hinge connection between said first and second panels.

Within the context of this specification the term "milling" should be interpreted broadly and include all processes being capable and configurable to selectively remove material from wooden panels. Hence milling covers also cutting and any other process which removes wooden material.

By milling the joining surfaces portion are formed which are aligned thus giving a well controlled joint between the furniture panels

The step of milling may comprise milling the side portion of said first panel and the side portion of said second panel simultaneously.

The step of milling may comprise milling the side portion of said first panel with at least a first milling cutter of said milling tool and milling the side portion of said second panel with at least a second milling cutter of said milling tool, wherein said first milling cutter provides a milling action being different from the milling action provided by the second milling cutter.

In an embodiment the step of milling comprises milling the side portion of said first panel by means of a first milling cutter, and milling the side portion of said second panel by means of a second milling cutter.

The at least one milling tool may be configured to run along the entire length of the respective side portions of said first panel and said second panel.

The step of joining the first panel and the second panel may comprise joining the side portion of the first panel and the side portion of the second panel by means of a joining tool applying said adhesive at least around a joining area of the side portions of said first panel and said second panel.

The joining tool may apply the adhesive substantially along the entire length of the side portions of said first panel and said second panel.

The adhesive may comprise glue, preferably a melt glue, such as a reactive type of melt glue or a thermoplastic melt glue. According to the invention, the first panel is joined to the second panel simultaneously with a third panel being joined with a fourth panel, the first and fourth panels forming side portions or top and bottom portions of a piece of furniture, and the second and third panels forming a foldable back piece, a first adhesive string joining the first and second panels, and a second adhesive string joining the third and fourth panels, an adhesive free area separating the first and second adhesive strings.

The step of milling may comprise cutting away a part of the side portion of said first panel around a joining area creating a joining surface, wherein said joining surface receives said adhesive during the step of joining the first panel and the second panel.

The step of milling may further comprise milling away another part of the side portion of said first panel next to the joining surface, creating an intermediate surface, wherein said intermediate surface is raised with respect to the joining surface, thereby creating an edge between the intermediate surface and the joining surface, said edge confining the adhesive to the joining surface during the application of the adhesive.

The step of milling may comprise cutting away a part of the side portion of said second panel around a joining area creating a joining surface, wherein said joining surface receives said adhesive during the step of joining the first panel and the second panel.

The step of milling may further comprise milling away another part of the side portion of said second panel next to the joining surface, creating an intermediate surface, wherein said intermediate surface is raised with respect to the joining surface thereby creating an edge between the intermediate surface and the joining surface, said edge confining the adhesive to the joining surface during the application of the adhesive.

The step of milling and the step of joining may be performed at least partly simultaneously at different positions of the side portions.

The step of milling may further comprise milling the side portion of said first panel and the side portion of said second panel such that their outer surfaces are arranged at an angle of between 10° and 300°, more preferably 30- 240°.

The step of milling may further comprise milling the side portion of said first panel and the side portion of said second panel such that their outer surfaces are arranged at an angle of between 80° and 100°, preferably about 90°.

According to a second aspect, a method for assembling a piece of furniture is provided. The method comprises the steps of providing a piece of furniture manufactured by performing the method according to the first aspect, and unfolding said first panel and said second panel such that said adhesive applied on the first panel faces the adhesive applied on the second panel.

According to a third aspect a piece of furniture is provided. The piece of furniture comprises at least one first panel having a milled joining surface of a side portion and at least one second panel having a milled joining surface of a side portion, wherein said side portions are connected to each other by means of an adhesive arranged on both joining surfaces, wherein said adhesive forms a hinge connection between said first and second panels.

The adhesive forming the hinge connection between said first and second panels may comprise a first adhesive string portion extending along the joining surface of the first panel, and a second adhesive string portion extending along the joining surface of the second panel, wherein the width of each respective adhesive string portion is 1-10 mm, more preferably 2-7 mm, preferably the total width of the adhesive forming the hinge connection and comprising the first and second adhesive string portions being 3-18 mm, more preferably 4-14 mm.

The adhesive thickness of the adhesive forming the hinge connection may be 0.1 to 2 mm, more preferably 0.2 to 1 mm.

The piece of furniture may be a cabinet type of furniture, such as a wardrobe or a cupboard or a chest of drawers, and it may comprise a back piece of the piece of furniture, said back piece comprising at least said first panel, a side wall or a top panel of the piece of furniture comprising said second panel, and a further side wall or a bottom panel of the piece of furniture comprising a fourth panel, wherein a first adhesive forms a first hinge connection connecting the back piece to the side wall or to the top panel, and a second adhesive forms a second hinge connection connecting the back piece to the further side wall or to the bottom panel.

The back piece may be a foldable back-piece divided into at least said first panel and a third panel, said first and third panels being foldable relative to each other, wherein the first adhesive forms a first hinge connection connecting the first panel of the foldable back piece to the side wall or to the top panel, and the second adhesive forms a second hinge connection connecting the third panel of the foldable back piece to the further side wall or to the bottom panel.

An adhesive-free area may be arranged between the first adhesive and the second adhesive making said first panel and said third panel un-connected to each other adjacent the first and second adhesives), preferably said adhesive free area having a width of at least 0.5 mm, preferably at least 1.0 mm.

The piece of furniture may be a drawer type of furniture, and it may comprise a bottom piece of the piece of furniture, said bottom piece comprising at least said first panel, a side wall of the piece of furniture comprising said second panel, and a further side wall of the piece of furniture comprising a fourth panel, wherein a first adhesive forms a first hinge connection connecting the bottom piece to the side wall, and a second adhesive forms a second hinge connection connecting the bottom piece to the further side wall.

According to a fourth aspect a manufacturing unit for manufacturing a piece of furniture having a first furniture panel and a second furniture panel connected to each other by means of an adhesive forming a hinge connection is provided. The manufacturing unit comprises at least one milling tool having at least one milling cutter configured to move along side portions of the furniture panels and to cut said first and second panels to form joining surfaces in the side portions, and at least one joining tool configured to apply an adhesive to said joining surfaces of said first and second panels to form a hinge connection joining said first and second side panels to each other.

The joining tool may be configured to follow the milling tool, preferably the milling tool and the joining tool are simultaneously operational during a manufacturing process.

The milling tool may comprise at least two milling cutters, wherein each milling cutter is configured to cut said first and second panel in similar ways.

In an embodiment the milling cutters are configured to cut said first and second panel differently.

The milling tool may comprise at least four milling cutters, wherein different milling cutters are arranged in an alternating manner.

The milling tool may comprise at least three milling cutters, wherein a first milling cutter is configured to cut said first and second panel in a way different from a second and a third milling cutter, and said second milling cutter is configured to cut said first and second panel in a way different from said third milling cutter.

The joining tool may be configured to apply a first adhesive on a first and a second panel and to simultaneously apply a second adhesive on a third and a fourth panel.

The joining tool may have a separating portion that is configured to form an adhesive-free area between the first adhesive and the second adhesive, preferably the adhesive-free area having a width of at least 0.5 mm, preferably at least 1 mm.

### BRIEF DESCRIPTION OF THE DRAWINGS

Embodiments of the invention will be described in the following, reference being made to the appended drawings which illustrate non-limiting examples of how the inventive concept can be reduced into practice.
Fig. 1 is a perspective view of a folded pre-manufactured piece of furniture;
Fig. 2 is a perspective view of the partially unfolded piece of furniture shown in Fig. 1;
Fig. 3 is a perspective view of a piece of furniture being manufactured by a manufacturing unit according to an embodiment;
Fig. 4 is a front view of the piece of furniture being manufactured in Fig. 3;
Figs. 5a-d are detailed cross-sectional views of milling patterns according to embodiments of the invention;
Figs. 6a-c are schematically showing three different embodiments of a method for manufacturing a piece of furniture;
Fig. 7a is a cross-sectional view of a manufacturing unit during operation according to an embodiment;
Fig. 7b is a cross-sectional view of a manufacturing unit during operation according to an embodiment;
Fig. 7c is a cross-sectional view of a piece of furniture resulting from the manufacturing schematically shown in Fig. 5b;
Figs. 8a-e are detailed views of an assembly method of the piece of furniture shown in Fig. 3;
Fig. 9 is a perspective view of a piece of furniture after the manufacturing process in a folded state;
Fig. 10 is a detailed view of a corner of the piece of furniture shown in Fig. 9;
Fig. 11 is a perspective view of the piece of furniture shown in Fig. 9 in an unfolded state;
Fig. 12 is a detailed view of a corner of the piece of furniture shown in Fig. 11;
Figs. 13A-F are perspective views and detail views of a piece of furniture being unfolded according to an embodiment;
Figs. 14A-F are perspective views and detail views of a piece of furniture being unfolded according to another embodiment;
Figs. 15A-F are perspective views and detail views of a piece of furniture according to yet another embodiment of the invention; and
Figs. 16A-F are perspective views and detail views of a piece of furniture according to yet another embodiment of the invention.

### DETAILED DESCRIPTION OF EMBODIMENTS

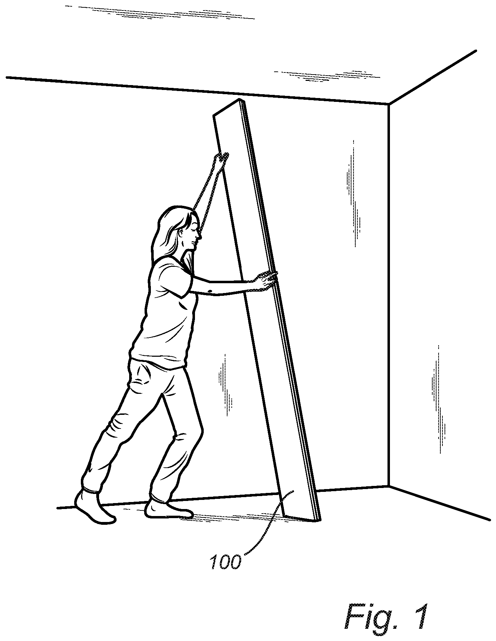

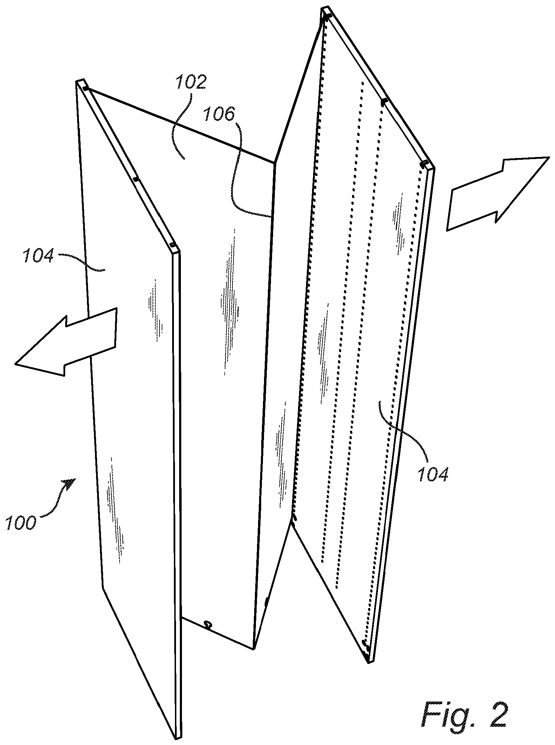

With reference to the accompanying drawings a piece of furniture 100 and a manufacturing process for manufacturing a pre-mounted piece of furniture 100 are illustrated. The piece of furniture 100 may be a part of a wardrobe (as is shown in Fig. 1), a part of a shelf, a part of a drawer, a part of a chest of drawers (such as a housing thereof) or the like. The furniture piece 100 includes a first furniture panel, in this case and from now on called a back piece 102, and at least one second furniture panel, from now on called a side wall 104, where the back piece 102 is pre-mounted to the at least one side wall 104. In order to facilitate the packaging and transport the piece of furniture 100 may be foldable. Shown in Fig. 2 the back piece 102 is foldable along a folding line 106 running along the entire length of the back piece 102, preferably at the centre of the back piece 102. In another embodiment (not shown) the side walls 104 are folded inwards and towards the back piece 102. Unfolding of the piece of furniture 100 results in a housing of for example a wardrobe, a shelf, or a drawer, having a back piece 102 and two side walls 104 extending perpendicular from the back piece 102. The unfolding process can e.g. be made either by unfolding the back piece 102 and the side walls 104 by 90° or 270° with respect to each other, which will be described in more detail below. Also different embodiments of a method for manufacturing the pre-mounted piece of furniture are described below.

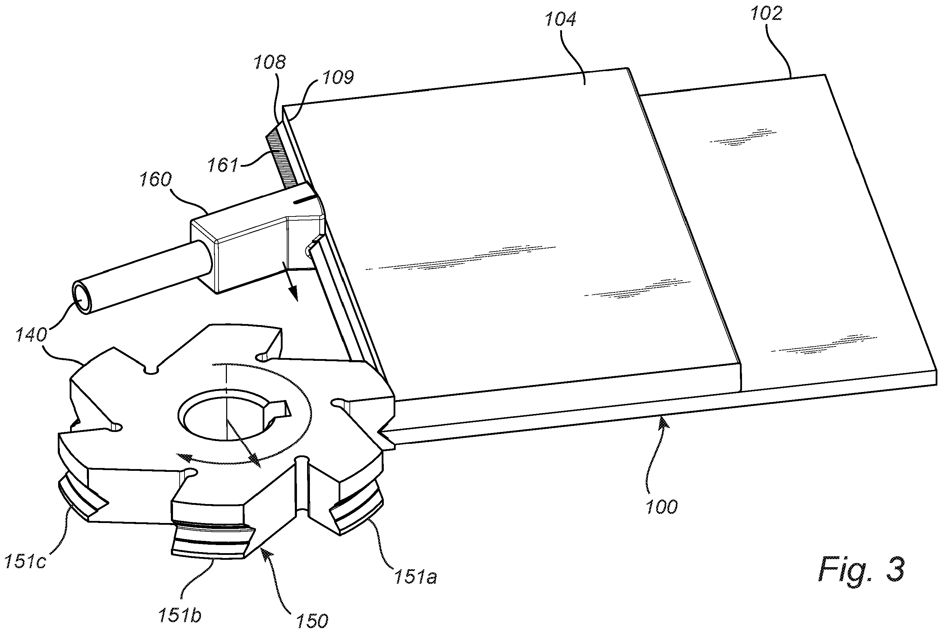

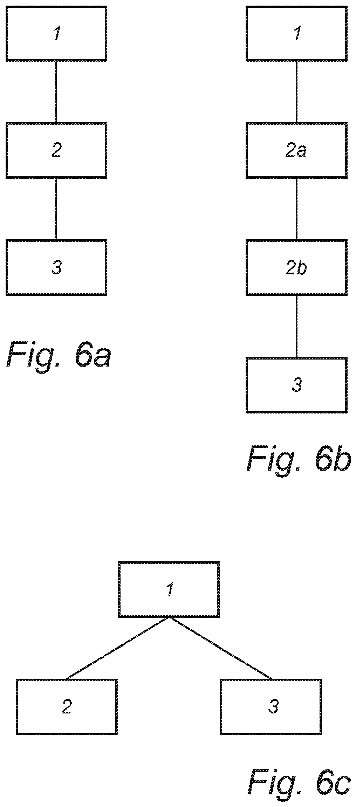

Fig. 3 illustrates an ongoing method for manufacturing a pre-mounted piece of furniture 100 while Figs. 6a-c schematically illustrate different types of methods. The back piece 102 and a side wall 104 are firstly arranged adjacent to each other such that a side portion 108 of the back piece 102 is substantially flush with a side portion 109 of the side wall 104. The side portion 108 of the back piece 102 and the side portion 109 of the side wall 104 are then milled by means of at least one milling tool 150, preferably a multipoint rotary tool with several milling cutters 151a-c. In the shown embodiment there is only one milling tool 150 having a plurality of milling cutters 151a-c cutting the back piece 102 and the side wall 104 simultaneously. The milling tool 150 is arranged to rotate at a specific speed and at the same time move along the extension of the side portions 108, 109 of the back piece 102 and the side wall 104. The milling tool 150 preferably runs along the entire length of the side portions 108, 109 and the milling cutters 151a-c are provided with respective patterns to cut the side portions 108, 109 in a predetermined way while the milling tool 150 rotates. The milling tool 150 is followed by a joining tool 160 configured to apply the adhesive 161 to the side portions 108, 108 in order to form a hinge connection 105 between the back piece 102 and the side wall 104.

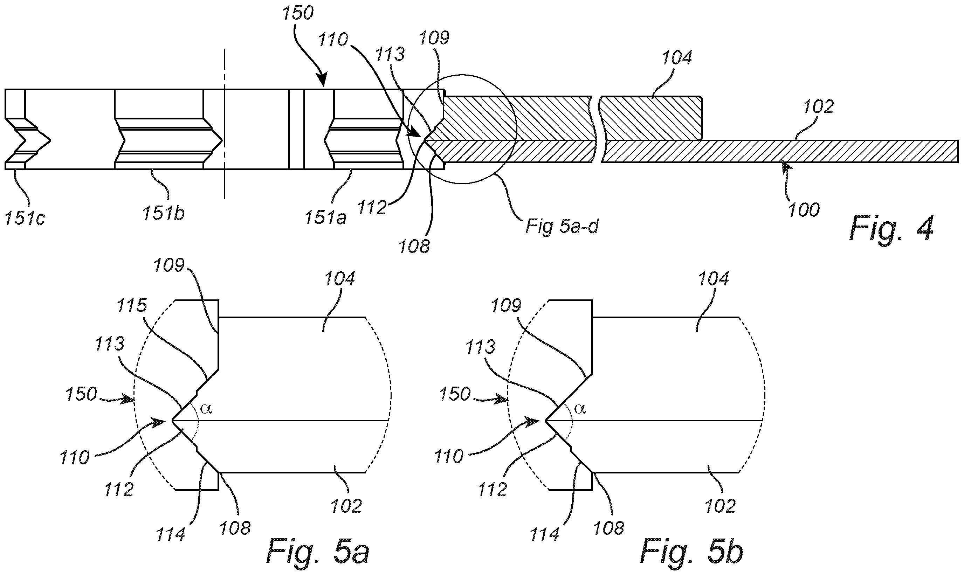

Fig. 4 and Figs. 5a-d illustrate the milling of the back piece 102 and the side wall 104 with different possible cutting patterns.

In an alternative embodiment (not shown) milling of the back piece 102 is made by a first milling tool and the milling of the side wall 104 is made by a second milling tool, whereby the milling cutters of the respective milling tools have different cutting patterns.

In yet another alternative embodiment (not shown) milling includes milling the side portion 108 of the back piece 102 with at least a first milling cutter of the milling tool and milling the side portion 109 of the side wall 104 with at least a second milling cutter of the milling tool. The first milling cutter may in such embodiment have a different pattern than the second milling cutter such that they work the back piece 102 and the side wall 104 differently. For a rotary milling tool having a plurality of milling cutters preferably every second milling cutter is configured to work on the first panel 102 and the remaining milling cutters are configured to work on the second panel 104.

The milling tool may be designed in whichever way is suitable or desired. Yet another example is a milling tool which has at least three milling cutters, where a first milling cutter is configured to work the first furniture panel (i.e. the back piece 102) and the second furniture panel (i.e. the side wall 104) in a way different from a second and a third milling cutter, and the second milling cutter is configured to work the first and second furniture panel 102, 104 in a way different from the third milling cutter. The patterns of the milling cutters and their respective positions can be varied.

With reference to Fig. 4 and Figs. 5a-d possible results of the milling process are shown. For example, during the milling process a part of the side portion 108 of the first panel 102 around a joining area 110 is cut away creating a surface, called a joining surface 112. At the same time a part of the side portion 109 of the second panel 104, around the joining area 110 is cut away, creating a corresponding surface, also called a joining surface 113. The two joining surfaces 112, 113 are dimensioned such that they can receive an adhesive 161 during the step of joining the first panel 102 and the second panel 104. The joining surface 112 of the first panel 102 and the joining surface 113 of the second panel 104 are arranged at an angle α of between 10° and 170°, preferably at an angle of between 80° and 100° and even more preferably about 90°.

The milling process may further include cutting away another part of the side portions 108, 109 of the first and second panels 102, 104, next to the joining surfaces 112, 113, creating other intermediate surfaces 114, 115. Each intermediate surface 114, 115 is parallel and slightly raised with respect to the adjacent joining surface 112, 113 respectively. Since the intermediate surfaces 114, 115 are slightly raised they form a natural stop for the adhesive 161 as well as a guide which the joining tool 160 can follow when applying the adhesive 161. This is shown in Fig. 5a.

The side portions 108, 109 shown in Fig. 6a may also be provided by a series of milling operations. For example, the side portion 108 of the first panel 102 may be milled in a first operation such that the joining surface 112 and the intermediate surface 114 are formed. In this operation, the side portion 109 of the second panel 104 is preferably left unaffected. This is shown in Fig. 5b.

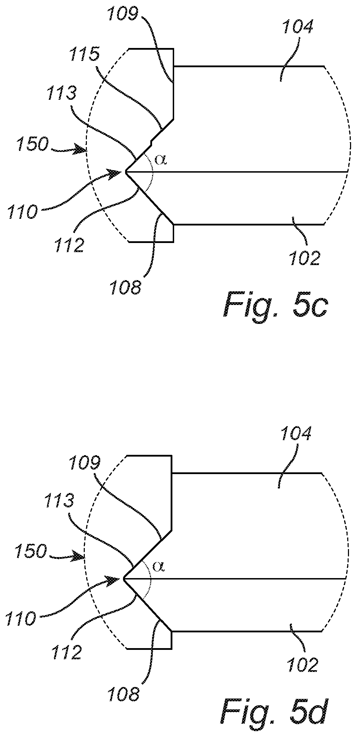

For such embodiment the side portion 109 of the second panel 104 may be milled in a second operation such that the joining surface 113 and the intermediate surface 115 are formed. In this operation, the side portion 108 of the first panel 102 is preferably left unaffected. This is shown in Fig. 5c.

Optionally the operations shown in Figs. 5b and 5c may be preceded by a milling operation in which both the first and second side portions 108, 109 are milled, however only to an extent shown in Fig. 5d. This milling operation does not provide a distinction between the joining surface 112, 113 and the intermediate surface 114, 115.

After the first panel 102 and second panel 104 have been milled they are connected by means of the adhesive 161, preferably in the form of glue. The manufacturing method includes joining the first panel 102 and the second panel 104 by means of the joining tool 160. The joining tool 160 is configured to apply the adhesive 161 at least around the joining area 110 of the side portion 108 of the first panel 102 and the side portion 109 of the second panel 104. Further, the joining tool 160 applies the adhesive 161 substantially along the entire length of the side portions 108, 109 of the first panel 102 and second panel 104.

In another aspect a manufacturing unit 140 for manufacturing the pre-mounted piece of furniture is provided. The unit 140 includes the milling tool 150 with at least one milling cutter 151a-c, configured to cut the back piece 102 and side wall 104, and at least one joining tool 160, configured to apply the adhesive 161 to the back piece 102 and side wall 104. The joining tool 160 follows the milling tool 150 and the milling tool 150 and the joining tool 160 are simultaneously operational during the manufacturing process. The milling tool may have at least two milling cutters 151a-c, which are configured to cut the back piece 102 and side wall 104 in similar ways.

An alternative is to have a milling tool having at least two milling cutters, where a first milling cutter is configured to cut the back piece 102 and the side wall 104 in a way which differs from the second milling cutter. The milling tool, which has also been described above, may have at least four milling cutters, wherein every other milling cutter are the first milling cutter and the remaining is the second milling cutter.

Another alternative is to have a milling tool having at least three milling cutters, where a first milling cutter is configured to cut the back piece 102 and side wall 104 in a way different from a second and a third milling cutter, and the milling cutter is configured to cut in a way different from the third milling cutter. Such a milling tool may preferably have at least six milling cutters.

The joining tool 160 preferably applies the adhesive 161 on the back piece 102 and side wall 104 simultaneously.

The manufacturing unit 140 can be seen as one unit moving at a predetermined speed along the extension of the side portions 108, 109 of the back piece 102 and side wall 104. This means that the milling tool 150 and the joining tool 160 move linearly, the joining tool 160 following the milling tool 150. At the same time the milling tool 150 rotates at a predetermined speed.

Figs. 6a-c further shows different types of manufacturing processes for producing a pre-mounted furniture module 100. Fig. 6a describes a process of:
1. arranging the first furniture panel 102 and the second furniture panel 104 adjacent to each other such that the side portion 108 of the first furniture panel 102 is substantially flush with the side portion 109 of the second furniture panel 104;
2. milling the side portion 108 of the first furniture panel 102 and the side portion 109 of the second furniture panel 104 by means of a milling tool 150, and
3. joining the side portion 108 of the first furniture panel 102 to the side portion 109 of the second furniture panel 104 by means of an adhesive 161, where the adhesive creates a hinge connection 105 between the first and second furniture panel 102, 104.

Fig. 6b describes a process of:
1. arranging the first furniture panel 102 and the second furniture panel 104 adjacent to each other such that the side portion 108 of the first furniture panel 102 is substantially flush with the side portion 109 of the second furniture panel 104;
2a. milling the side portion 108 of the first furniture panel 102 by means of a first milling tool,
2b. milling the side portion 109 of the second furniture panel 104 by means of a second milling tool, and
3. joining the side portion 108 of the first furniture panel 102 to the side portion 109 of the second furniture panel 104 by means of an adhesive 161, where the adhesive creates a hinge connection 105 between the first and second furniture panel 102, 104.

Further, Fig. 6c describes a process of:
1. arranging the first furniture panel 102 and the second furniture panel 104 adjacent to each other such that the side portion 108 of the first furniture panel 102 is substantially flush with the side portion 109 of the second furniture panel 104;
2. milling the side portion 108 of the first furniture panel 102 and the side portion 109 of the second furniture panel 104 by means of a milling tool 150, and simultaneously
3. joining the side portion 108 of the first furniture panel 102 to the side portion 109 of the second furniture panel 104 by means of an adhesive 161, where the adhesive creates a hinge connection 105 between the first and second furniture panels 102, 104.

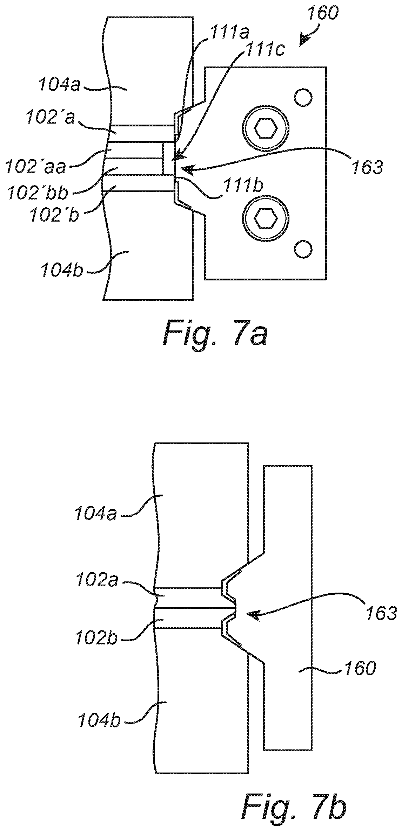

In Fig. 7a the setup during manufacturing of the piece of furniture 100 is shown. The setup involves the joining tool 160 and a number of panels 102'a-b, 102'aa-bb, 104-b. The panels 102'a-b, 102'aa-bb together form a joint panel, such as a back piece, while the panels 104a-b form a respective side wall.

A first side wall 104a is attached to the panel 102'a by means of a first hinge connection formed by adhesive applied by means of the joining tool 160. The second side wall 104b is attached to the panel 102'b by means of a second hinge connection formed by adhesive applied by means of the same joining tool 160 in a simultaneous operation. At each connection the adhesive is arranged leaving an adhesive-free area 111a-b adjacent to where the connected panel 102'a-b meets with its associated panel 102'aa-bb. The joining tool 160 is for this purpose provided with a separating portion 163 that is configured to form the adhesive-free area 111a-b between the first and second strings of adhesive. Preferably each adhesive-free area 111a-b is having a width of at least 0.5 mm, preferably at least 1 mm.

The back panel 102'a-b, 102'aa-bb is formed by connecting the first panel 102'a with the associated panel 102'aa such that these panels 102'a, 102'aa may be foldable relative each other. Further, the panel 102'b is connected to the associated panel 102'bb such that these panels 102'b, 102'bb may be foldable relative each other.

The associated panels 102'aa, 102'bb are connected to each other at the area 111c e.g. by means of a foil or similar such that also these panels 102'aa, 102'bb are foldable relative each other. This means that the back piece will be foldable along three lines, i.e. at the connection between panels 102'a, 102'aa, between panels 102'aa, 102'bb, and between panels 102'bb, 102'b. Additionally the adhesive forms two respective hinge connections such that the back piece is also foldable relative the side walls 104a, 104b.

In Fig. 7b another setup is shown for manufacturing of another type of piece of furniture. Here the back piece is formed by only two panels 102a, 102b. Each back piece panel 102a, 102b is connected to a respective side wall 104a, 104b by applying an adhesive at the interface between the panels 102a-b, 104a-b. Also in this embodiment the joining tool 160 is provided with a separating portion 163 that is configured to form an adhesive-free area between the first and second strings of adhesive. Preferably the adhesive-free area is having a width of at least 0.5 mm, preferably at least 1 mm.

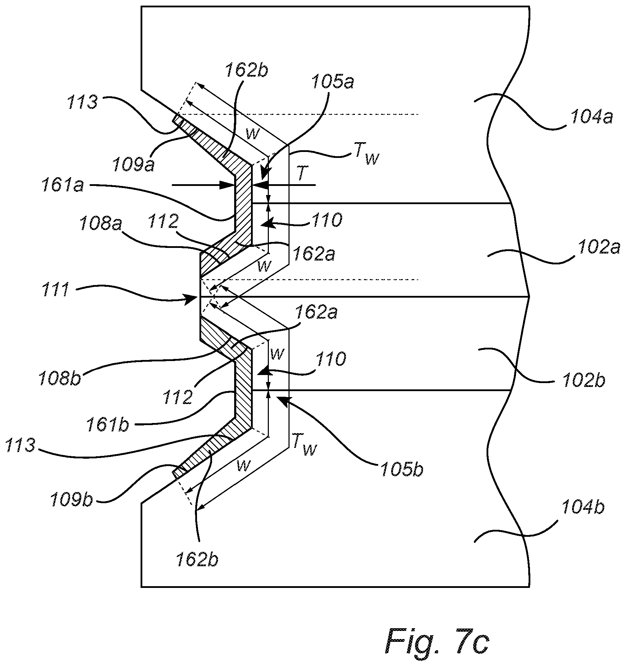

In Fig. 7c more details of the hinge connections 105a, 105b are shown. The first hinge connection 105a, forming a connection between the back piece panel 102a and the side wall panel 104a is provided by means of an adhesive 161a having a first portion 162a being arranged along a part of the side portion 108a of the panel 102a, and a second portion 162b being arranged along a part of the side portion 109a of the panel 104a. The first portion 108a and the second portion 109a are connected.

The second hinge connection 105b, forming a connection between the back piece panel 102b and the side wall panel 104b is provided by means of an adhesive 161b having a first portion 162a being arranged along a part of the side portion 108b of the panel 102b, and a second portion 162b being arranged along a part of the side portion 109b of the panel 104b. The first portion 108b and the second portion 109b are connected.

The lengths of the first and second portions 108a-b, 109a-b will of course depend on the width of the panels 102a-b, 104a-b and the configuration of the side portions 108a-b, 109a-b. In one embodiment the length of each first portion 108a-b is approximately 2.8mm, and the length of each second portion 109a-b is approximately 3.5mm. Hence, the total width of the joint adhesive (i.e. the sum of the length of the first and second portions 108a, 109a) is approximately 5.3 mm. Depending on the particular application, the width of the adhesive 161a, 161b should preferably be in the range of 1.0-20 mm, such as between 2.0 and 10 mm.

Each adhesive 161a-b forming the hinge connection 105a-b comprises a first adhesive string portion 162a arranged at the first panel 102a-b and a second adhesive string portion 162b arranged at the second panel 104a-b. The width W of each respective adhesive string portion 162a, 162b is preferably in the range of 1-10 mm, more preferably 2-7 mm. The total width TW of the adhesive 161 forming the hinge connection 105a-b and comprising the first and second adhesive string portions 162a, 162b is preferably 3-18 mm, more preferably 4-14 mm.

The adhesive thickness T of the adhesive 161a-b forming the hinge connection 105a-b is typically 0.1 to 2 mm, more preferably 0.2 to 1 mm.

As can be seen in Fig. 7c an adhesive-free area 111 is provided between the first and second adhesives 161a-b. This allows the back piece panels 102a-b to fold relative each other by means of a hinge connection (not shown) at their ends opposite the ends connecting to the side walls 104a-b.

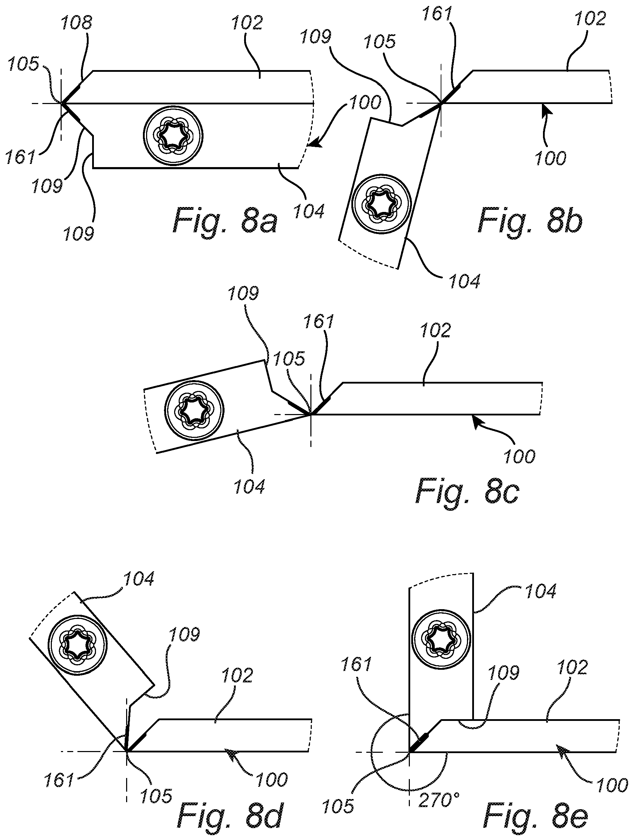

When assembling the piece of furniture the second panel(s) 104 is rotated relative the first panel 102 from a folded state to an unfolded state, as is shown in Figs. 8a-e. This is enabled due to the adhesive 161 forming a hinge connection 105 between the first and second panel 102, 104.

Initially a user unfolds the first panel 102 relative the second panel 104. The relative rotation between the first panel 102 and the second panel 104 is approximately 270°. As is shown in Fig. 8e the side portion 108 of the first panel 102 and the side portion 109 of the second panel 104 will face each other and meet when the final corner shape is formed. Additionally, the side portion 109 of the second panel 104 is provided with a stop surface 109' being arranged at 90° relative the general plane in which the second panel 104 extends. This stop surface 109' will prevent the second panel 104 to rotate beyond the desired end position, in this embodiment being 270°. This means that the adhesive 161 is located only on the inside of furniture module 100, i.e. being totally enclosed by the first and second panel 102, 104.

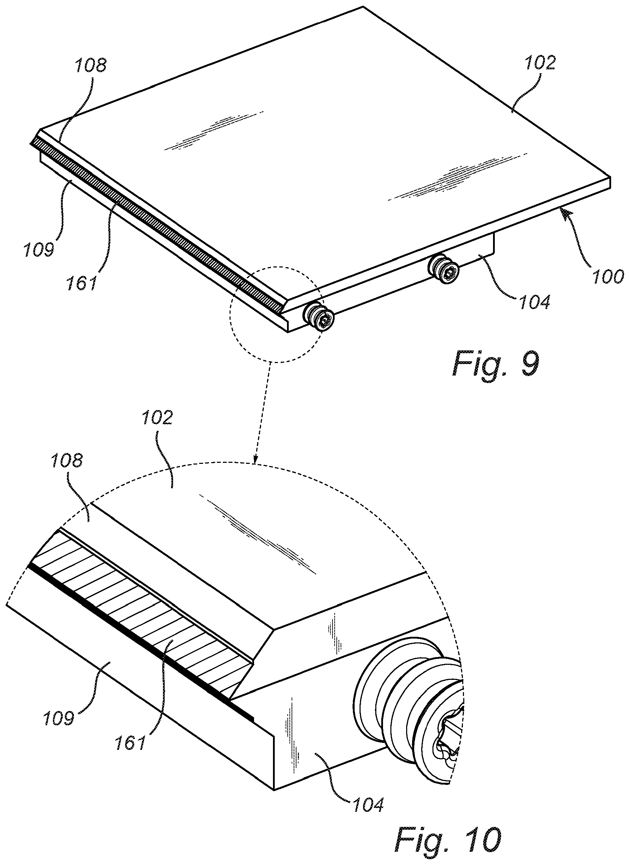

Fig. 9 shows parts of a piece of furniture 100 with a first panel 102 and a second panel 104 pre-mounted to each other. In Fig. 9 the first and second panels 102, 104 are positioned in a folded state, i.e. a pre-assembly state. The first and second panels 102, 104 are pre-mounted to each other by means of the adhesive 161, preferably in the form of glue, which is arranged along the length of a side portion 108 of the first panel 102 and a side portion 109 of the second panel 104. This is further shown in Fig. 10.

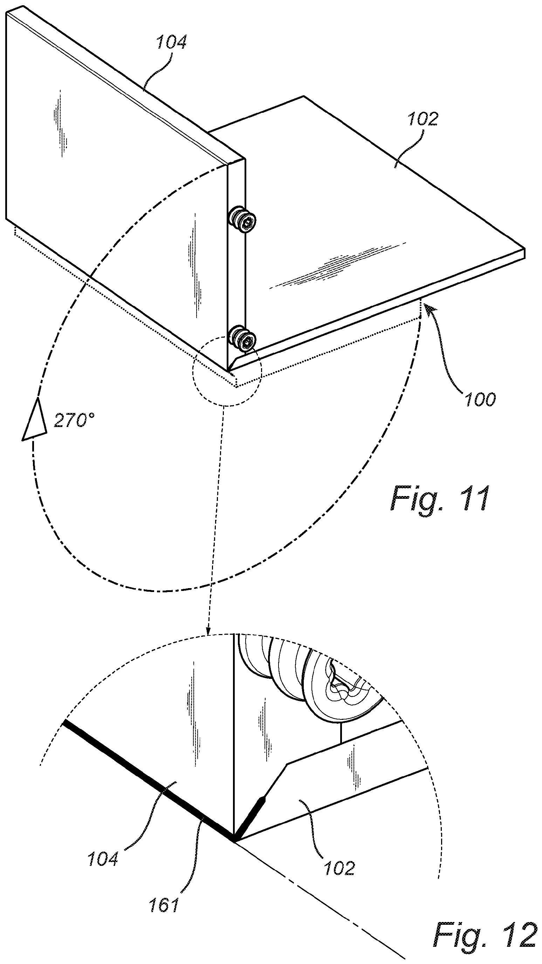

Figs. 11-12 show the piece of furniture explained previously with reference to Fig. 9. In these figures the piece of furniture is shown in their unfolded states, i.e. after the panels 102, 104 have been unfolded 270° with respect to each other. The adhesive 161 is substantially enclosed by the two panels 102, 104. After the piece of furniture 100 has been unfolded it may be connected to further panels (not shown).

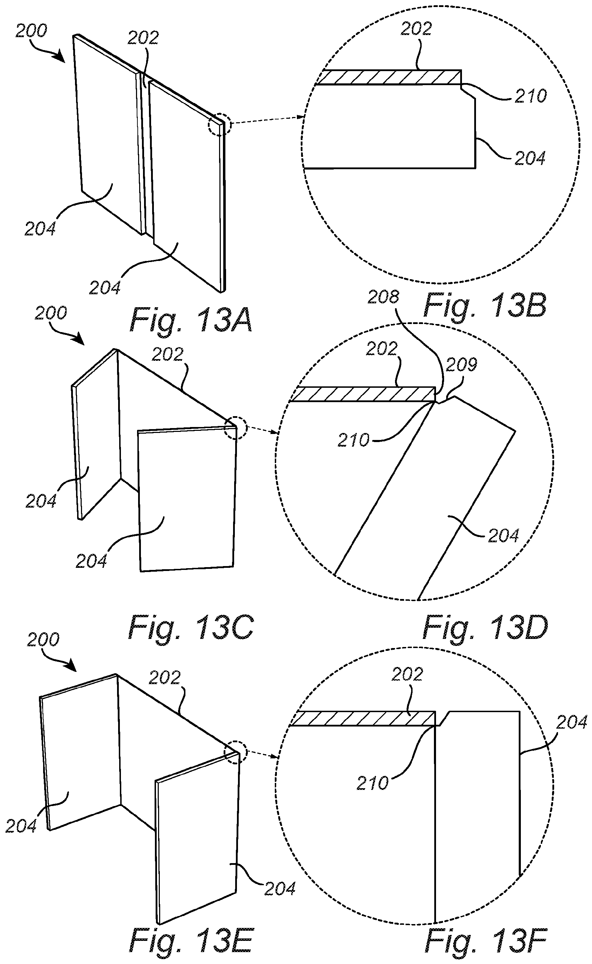

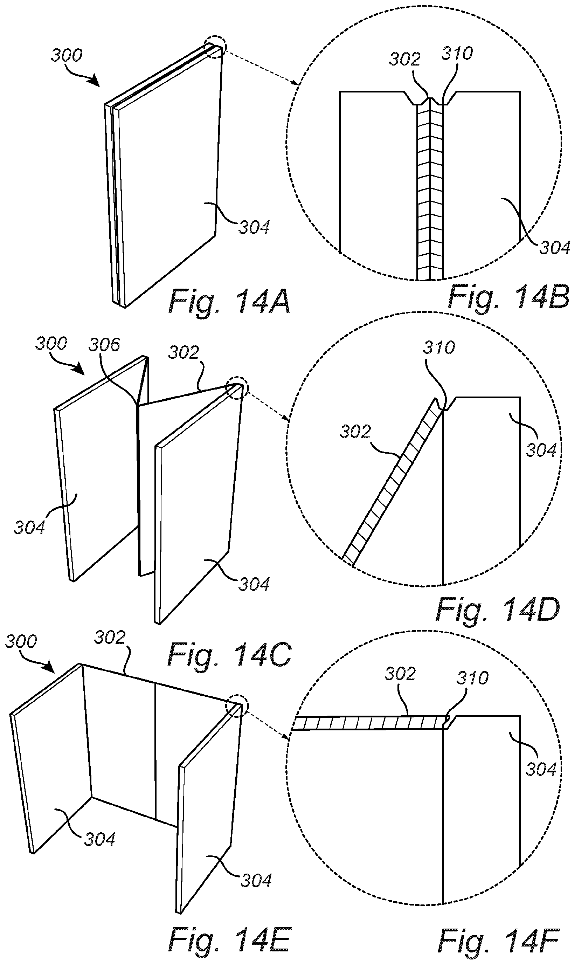

Figs. 13A-E and Figs. 14A-E show two examples of a pre-mounted piece of furniture during an assembling process, having different cuts made be the cutting tool.

According to another embodiment Figs. 13A, 13C, and 13E show the folding sequence for erecting sidewalls 206 relative a back piece 202. Fig. 13B is a detailed view of a corner of the piece of furniture 200 shown in Fig. 13A. Fig. 13D is a detailed view of a corner between the back piece 202 and a side wall 206 of the housing 200 shown in Fig. 13C and Fig. 13F is a detailed view of the corner shown in Fig. 13E. In this another alternative embodiment the back piece 202 is not foldable along a centre line. Instead the side walls 206 are folded along the back piece 202 towards the centre of the back piece 202 for compact packaging and transportation of the unassembled wardrobe. When unfolding the piece of furniture 200 the side walls 206 are unfolded approximately 90 degrees from the back piece 202. The back piece 202 and the side walls 206 are pre-mounted to each other by means of an adhesive 280, for example glue. The adhesive 280 is preferably provided along the entire height of the back piece 202 and/or side wall 206. When hardened, the glue forms a resilient attachment joint between the sidewall 206 and the back piece 202. A portion of the edge 206' of the side wall 206 has been cut off in order to create an area for attaching the back piece 202. The height of the cut off edge 206' corresponds to the thickness of the back piece 202 such that when the housing 200 is in its unfolded state, see Figs 13E and F, the rear surface 202' of the back piece 202 is flush with the most rear portion 206" of the side wall 206.

According to another embodiment Figs. 14A, 14C, and 14E show the folding sequence for erecting the sidewalls 306 relative the back piece 302. Fig. 14B is a detailed view of a corner of the piece of furniture 300 shown in Fig. 14A. Fig. 14D is a detailed view of a corner between the back piece 302 and a side wall 306 of the piece fo furniture 300 shown in Fig. 14C and Fig. 14F is a detailed view of the corner shown in Fig. 14E. In this embodiment the back piece 302 is yet again foldable, having a centre line 304 about which the back piece 302 is foldable. Also in this embodiment the back piece 302 and the side walls 306 are pre-mounted to each other by means of an adhesive 380, for example glue. The adhesive 380 is preferably provided along the entire height of the back piece 302 and/or side wall 306 respectively. When hardened, the glue forms a resilient attachment joint between the sidewall 306 and the back piece 302. Yet again, a portion of the edge 3506' of the side wall 306, has been cut off in order to create a desired area for attaching the back piece 302 with the adhesive 380. The height of the cut off edge 306' corresponds to the thickness of the back piece 302 such that when the housing 300 is in its unfolded state, see Figs 14E and F, the rear surface 302' of the back piece 302 is flush with the most rear portion 306" of the side wall 306. In addition, the edge of the back piece 302, which is attached to the side wall 306, has an inclined surface extending from the attachment point P to its rear surface 306'. The inclination of the surface preferably corresponds to the inclination of the cut off edge 306' of the side wall 306.

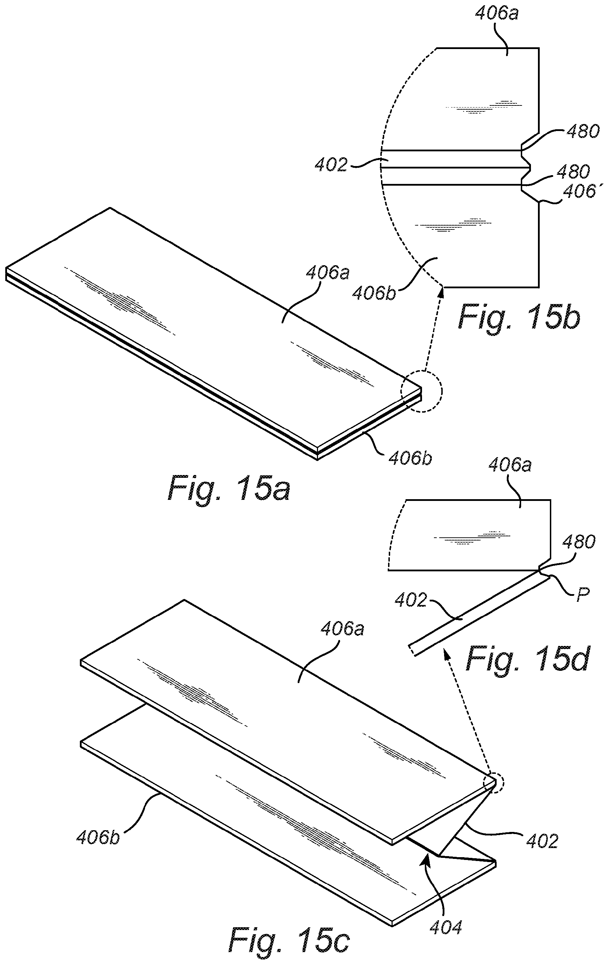

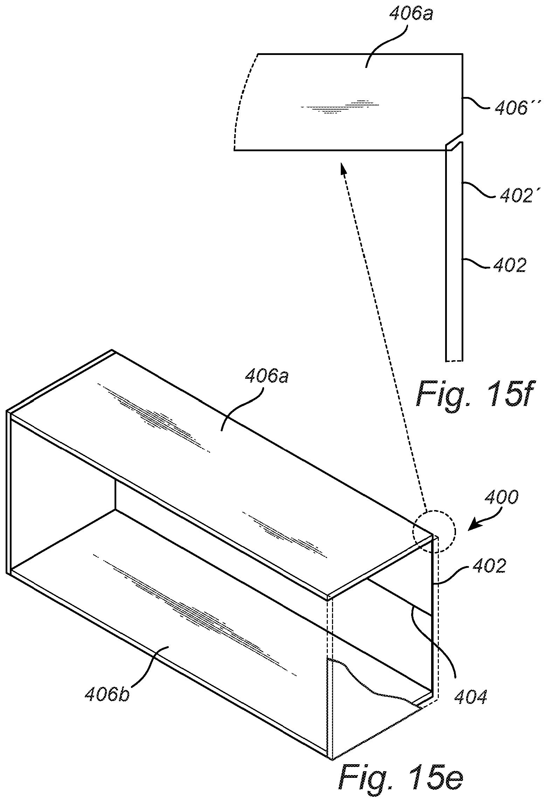

In addition, the furniture module has been described as having a "top" and "bottom" ends, and comprising "side" walls. A skilled person realizes that such a furniture module, when assembled, ca be arranged with the "side" walls facing the floor and ceiling, respectively, and the "top" and "bottom" ends thus being "left" and "right" ends. For instance, a TV bench, which is typical a low, in height, but wide furniture module which may be provided using the present invention by having the back piece pre-mounted to the top and bottom furniture panels. Such an embodiment is disclosed in Figs. 15A-F. Figs. 15A, 15C, and 15E show the folding sequence for erecting the furniture panels 406a-b relative the back piece 402. Fig. 15B is a detailed view of a rear end of the folded housing 400 shown in Fig. 15A. Fig. 15D is a detailed view of a corner between the back piece 402 and a furniture panel 406a of the housing 400 shown in Fig. 15C and Fig. 15F is a detailed view of the corner shown in Fig. 15E. In this embodiment the back piece 402 is yet again foldable, having a centre line 404 about which the back piece 402 is foldable. Also in this embodiment the back piece 402 and the furniture panels 406a-b are pre-mounted to each other by means of an adhesive 480, for example glue. The adhesive 480 is preferably provided along the entire height of the back piece 402 and/or furniture panels 406a-b respectively. When hardened, the glue forms a resilient attachment joint between each one of the furniture panels 406a-b and the back piece 402. Yet again, a portion of the edge 406' of each furniture panel 406a-b, has been cut off in order to create a desired area for attaching the back piece 402 with the adhesive 480. The height of the cut off edge 406' corresponds to the thickness of the back piece 402 such that when the housing 400 is in its unfolded state, see Figs 15E and F, the rear surface 402' of the back piece 402 is flush with the most rear portion 406" of the furniture panel 406a-b. In addition, the edge of the back piece 402, which is attached to the furniture panel 406, has an inclined surface extending from the attachment point P to its rear surface 402'. The inclination of the surface preferably corresponds to the inclination of the cut off edge 406' of the furniture panel 406.

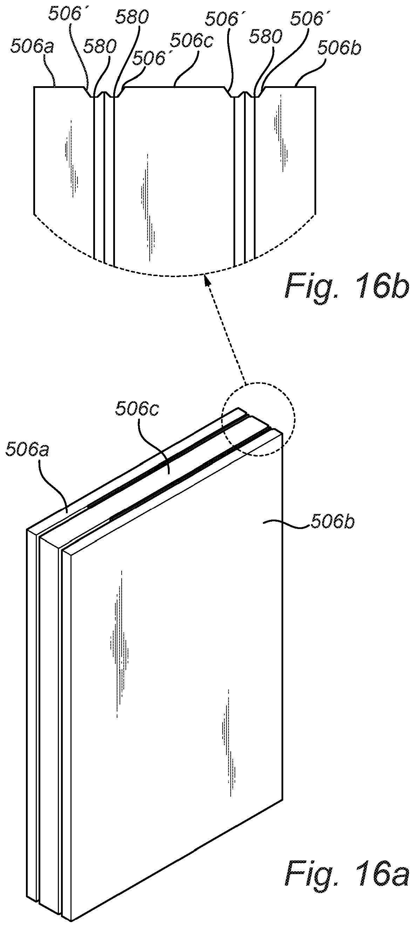

It is also realized that the furniture module according to the present invention could have one or several interior walls, being parallel with the side walls or furniture panels. Interior walls might be needed for instance for a wide wardrobe, e.g. a wardrobe having a larger width that e.g. 1 meter. Such and embodiment is shown in Figs. 16A-F.

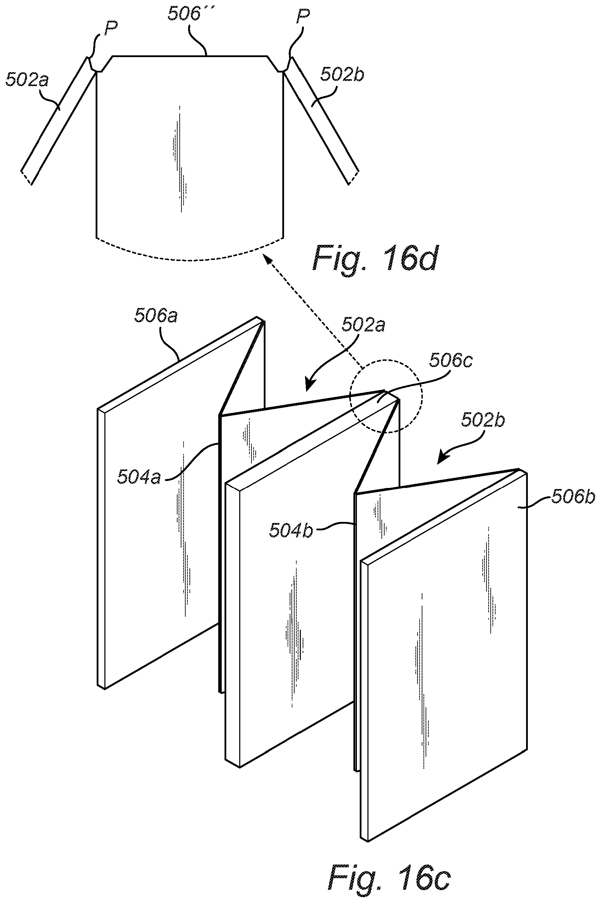

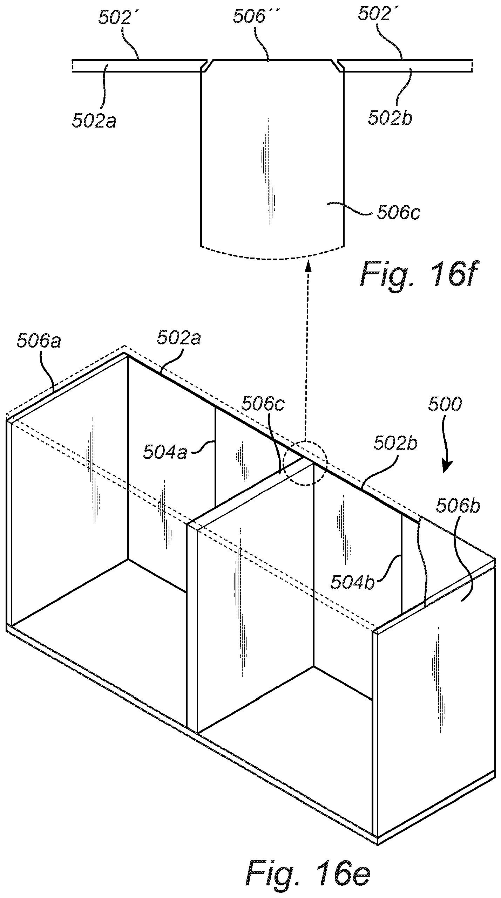

Figs. 16A, 16C, and 16E show the folding sequence for erecting the furniture panels 506a-b forming the side walls, as well as the furniture panel 506c forming the interior wall, relative the back pieces 502a-b. Fig. 16B is a detailed view of a rear end of the folded housing 500 shown in Fig. 16A. Fig. 16D is a detailed view of a corner between each one of the back pieces 502a-b and the interior wall 506c of the housing 500 shown in Fig. 16C and Fig. 16F is a detailed view of the corner shown in Fig. 16E. In this embodiment each back piece 502a-b is yet again foldable, having a centre line 504a-b about which the respective back piece 502a-b is foldable. Also in this embodiment each back piece 502a-b is pre-mounted to furniture panels 506a-c by means of an adhesive 580, for example glue. The adhesive 580 is preferably provided along the entire height of each back piece 502a-b and/or furniture panels 506a-c respectively. When hardened, the glue forms a resilient attachment joint between each one of the furniture panels 506a-c, i.e. the side walls as well as the interior wall, and the back pieces 502a-b. Yet again, a portion of the edge 506' of each furniture panel 506a-c, has been cut off in order to create a desired area for attaching a respective back piece 502a-b with the adhesive 580. The height of the cut off edge 506' corresponds to the thickness of the back piece 502a-b such that when the housing 500 is in its unfolded state, see Figs 16E and F, the rear surface 502' of each back piece 502a-b is flush with the most rear portion 506" of the furniture panel 506a-c. In addition, the edge of each back piece 502a-b, which is attached to the furniture panel 506a-c, has an inclined surface extending from the attachment point P to its rear surface 502'. The inclination of the surface preferably correspond to the inclination of the cut off edge 506' of each furniture panel, or wall 506a-c.

If the furniture module comprises an interior wall 506c, it is realized that the back piece 502a-b is preferably not connected to a first and a second side wall 506a-b but instead a first back piece 502a is connected to a first side wall 506a and to the interior wall 506c. The interior wall 506c is then, in turn, connected to a second back piece 502b, and the second back piece 502b is connected to the second side wall 506b. Obviously it is even possible to have more than one interior wall 506c if very wide furniture modules are required.

Although the present invention has been described above with reference to specific embodiments, it is not intended to be limited to the specific form set forth herein. Rather, the invention is limited only by the accompanying claims.

## Claims

1. A method for manufacturing a piece of furniture (100) comprising a first furniture panel (102) and at least a second furniture panel (104), said method comprising the steps of:
- arranging said first panel (102) and said second panel (104) adjacent to each other such that a side portion (108) of said first panel (102) is substantially flush with a side portion (109) of said second panel (104),
- milling the side portion (108) of the first panel (102) and the side portion (109) of the second panel (104) by means of at least one milling tool (150) to form joining surfaces (112, 113) of the respective side portions (108, 109), and
- joining the side portion (108) of the first panel (102) and the side portion (109) of the second panel (104) by applying an adhesive (161) to both joining surfaces (112, 113), wherein said adhesive creates a hinge connection (105) between said first and second panels (102, 104), **characterized in that**
the first panel (102a) is joined to the second panel (104a) simultaneously with a third panel (102b) being joined with a fourth panel (104b), the first and fourth panels (104a, 104b) forming side portions (104, 204, 304) or top and bottom portions (406a, 406b) of a piece of furniture, and the second and third panels (102a, 102b) forming a foldable back piece (102, 302, 402), a first adhesive string (161a) joining the first and second panels (102a, 104a), and a second adhesive string (161b) joining the third and fourth panels (102b, 104b), an adhesive free area (111) separating the first and second adhesive strings (161a, 161b).

2. The method according to claim 1, wherein the step of milling comprises milling the side portion (108) of said first panel (102) and the side portion (109) of said second panel (104) simultaneously.

3. The method according to claim 1 or 2, wherein the step of milling comprises milling the side portion (108) of said first panel (102) with at least a first milling cutter (151a-d) of said milling tool (150) and milling the side portion (109) of said second panel (104) with at least a second milling cutter (151a-d) of said milling tool (150), preferably said first milling cutter (151a-d) provides a milling action being different from the milling action provided by the second milling cutter (151a-d).

4. The method according to claim 1, wherein the step of milling comprises milling the side portion (108) of said first panel (102) by means of a first milling cutter, and milling the side portion (109) of said second panel (104) by means of a second milling cutter.

5. The method according to any one of the preceding claims, wherein said at least one milling tool (150) is configured to run along the entire length of the respective side portions (108, 109) of said first panel (102) and said second panel (104).

6. The method according to any one of the preceding claims, wherein the step of joining the first panel (102) and the second panel (104) comprises joining the side portion (108) of the first panel (102) and the side portion (109) of the second panel (104) by means of a joining tool (160) applying said adhesive (161) at least around a joining area (110) of the side portions (108, 109) of said first panel (102) and said second panel (104).

7. The method according to claim 6, wherein said joining tool (160) applies said adhesive (161) substantially along the entire length of the side portions (108, 109) of said first panel (102) and said second panel (104).

8. The method according to any one of the preceding claims, wherein said adhesive (161) comprises glue, preferably a melt glue, such as a reactive type of melt glue or a thermoplastic type of melt glue.

9. The method according to any one of the preceding claims, wherein the step of milling comprises cutting away a part of the side portion (108) of said first panel (102) around a joining area (110) creating a joining surface (112), wherein said joining surface (112) receives said adhesive (161) during the step of joining the first panel (102) and the second panel (104), and optionally wherein the step of milling further comprises milling away another part of the side portion (108) of said first panel (102) next to the joining surface (112), creating an intermediate surface (114), wherein said intermediate surface (114) is raised with respect to the joining surface (112), thereby creating an edge between the intermediate surface (114) and the joining surface (112), said edge confining the adhesive (161) to the joining surface (112) during the application of the adhesive.

10. The method according to any one of the preceding claims, wherein the step of milling comprises cutting away a part of the side portion (109) of said second panel (104) around a joining area (110) creating a joining surface (113), wherein said joining surface (113) receives said adhesive (161) during the step of joining the first panel (102) and the second panel (104), and optionally wherein the step of milling further comprises milling away another part of the side portion (109) of said second panel (104) next to the joining surface (113), creating an intermediate surface (115), wherein said intermediate surface (115) is raised with respect to the joining surface (113) thereby creating an edge between the intermediate surface (115) and the joining surface (113), said edge confining the adhesive to the joining surface (113) during the application of the adhesive (161).

11. The method according to any one of the preceding claims, wherein the step of milling and the step of joining are performed at least partly simultaneously at different positions of the side portions (108, 109).

12. The method according to any one of the preceding claims, wherein the step of milling further comprises milling the side portion (108) of said first panel (102) and the side portion (109) of said second panel (104) such that their outer surfaces (112, 113, 114, 115) are arranged at an angle (α) of between 10° and 300°, more preferably 30- 240°.

13. The method according to any one of the preceding claims, wherein the step of milling further comprises milling the side portion (108) of said first panel (102) and the side portion (109) of said second panel (104) such that their outer surfaces (112, 113, 114, 115) are arranged at an angle (α) of between 80° and 100°, preferably about 90°.

14. A method for assembling a piece of furniture, comprising the steps of:
- providing a piece of furniture (100) manufactured according to the method according to any one of the preceding claims, and
- unfolding said first panel (102) and said second panel (104) such that said adhesive (161) applied on the first panel (102) faces the adhesive (161) applied on the second panel (104).

## Patentansprüche

1. Verfahren zur Herstellung eines Möbelstücks (100), umfassend eine erste Möbelplatte (102) und mindestens eine zweite Möbelplatte (104), wobei das Verfahren die Schritte umfasst:
- Anordnen der ersten Platte (102) und der zweiten Platte (104) nebeneinander derart, dass ein Seitenteil (108) der ersten Platte (102) im Wesentlichen bündig mit einem Seitenteil (109) der zweiten Platte (104) ist,
- Fräsen des Seitenteils (108) der ersten Platte (102) und des Seitenteils (109) der zweiten Platte (104) mittels mindestens eines Fräswerkzeugs (150), um Verbindungsflächen (112, 113) der jeweiligen Seitenteile (108, 109) zu formen, und
- Verbinden des Seitenteils (108) der ersten Platte (102) und des Seitenteils (109) der zweiten Platte (104) durch Aufbringen eines Klebstoffs (161) auf beide Verbindungsflächen (112, 113), wobei der Klebstoff eine Scharnierverbindung (105) zwischen der ersten und der zweiten Platte 102, 104) erzeugt, **dadurch gekennzeichnet, dass**
die erste Platte (102a) mit der zweiten Platte (104a) gleichzeitig mit einer dritten Platte (102b) verbunden wird, die mit einer vierten Platte (104b) verbunden wird, wobei die ersten und vierten Platten (104a, 104b) Seitenteile (104, 204, 304) oder obere und untere Abschnitte (406a, 406b) eines Möbelstücks bilden, und die zweite und dritte Platte (102a, 102b) ein faltbares Rückenteil (102, 302, 402) bilden, wobei ein erster Klebstoffstrang (161a) die erste und die zweite Platte (102a, 104a) verbindet und ein zweiter Klebstoffstrang (161b) die dritte und die vierte Platte (102b, 104b) verbindet, wobei ein klebstofffreier Bereich (111) den ersten und den zweiten Klebstoffstrang (161a, 161b) trennt.

2. Verfahren nach Anspruch 1, wobei der Schritt des Fräsens das Fräsen des Seitenteils (108) der ersten Platte (102) und des Seitenteils (109) der ersten Platte zweite Platte (104) gleichzeitig umfasst.

3. Verfahren nach Anspruch 1 oder 2, wobei der Schritt des Fräsens umfasst
Fräsen des Seitenteils (108) der ersten Platte (102) mit mindestens einem ersten Fräser (151a-d) des Fräswerkzeugs (150) und Fräsen des Seitenteils (109) der zweiten Platte (104) mit mindestens einem zweiten Fräser (151a-d) des Fräswerkzeugs (150), wobei vorzugsweise der erste Fräser (151a-d) eine unterschiedliche Fräswirkung gegenüber der Fräswirkung des zweiten Fräsers (151a-d) liefert.

4. Verfahren nach Anspruch 1, wobei der Schritt des Fräsens umfasst
Fräsen des Seitenteils (108) der ersten Platte (102) mittels eines ersten Fräsers, und Fräsen des Seitenteils (109) der zweiten Platte (104) mittels eines zweiten Fräsers.

5. Verfahren nach einem der vorhergehenden Ansprüche, wobei das mindestens eine Fräswerkzeug (150) so konfiguriert ist, dass es über die gesamte Länge der jeweiligen Seitenteile (108, 109) der ersten Platte (102) und der zweiten Platte (104) läuft.

6. Verfahren nach einem der vorhergehenden Ansprüche, wobei der Schritt des Verbindens der ersten Platte (102) und der zweiten Platte (104) das Verbinden des Seitenteils (108) der ersten Platte (102) und der Seitenteils (109) der zweiten Platte (104) mittels eines Verbindungswerkzeugs (160) umfasst, das den Klebstoff (161) mindestens um einen Verbindungsbereich (110) der Seitenteile (108, 109) der ersten Platte (102) und der zweite Platte (104) herum aufbringt.

7. Verfahren nach Anspruch 6, wobei das Verbindungswerkzeug (160) den Klebstoff (161) im wesentlichen über die gesamte Länge der Seitenteile (108, 109) der ersten Platte (102) und der zweiten Platte (104) aufbringt.

8. Verfahren nach einem der vorhergehenden Ansprüche, wobei der Klebstoff (161) Leim, vorzugsweise einen Schmelzkleber, wie einen reaktiven Schmelzkleber oder einen thermoplastischen Typ eines Schmelzklebers umfasst.

9. Verfahren nach einem der vorhergehenden Ansprüche, wobei der Schritt des Fräsens das Wegschneiden eines Teils des Seitenteils (108) der ersten Platte (102) um einen Verbindungsbereich (110) herum umfasst, wodurch eine Verbindungsfläche (112) erzeugt wird, wobei die Verbindungsfläche (112) den Klebstoff (161) während des Schrittes des Verbindens der ersten Platte (102) und der zweiten Platte (104) erhält, und wobei optional der Schritt des Fräsens ferner ein Abfräsen eines anderen Teils des Seitenteils (108) der ersten Platte (102) neben der Verbindungsfläche (112) umfasst, wodurch eine Zwischenfläche (114) erzeugt wird, wobei die Zwischenfläche (114) in Bezug auf die Verbindungsfläche (112) erhaben ist, wodurch eine Kante zwischen der Zwischenfläche (114) und der Verbindungsfläche (112) erzeugt wird, wobei die Kante den Klebstoff (161) während des Aufbringens des Klebstoffs auf die Verbindungsfläche (112) beschränkt.

10. Verfahren nach einem der vorhergehenden Ansprüche, wobei der Schritt des Fräsens das Wegschneiden eines Teils des Seitenteils (109) der zweiten Platte (104) um einen Verbindungsbereich (110) herum umfasst, wodurch eine Verbindungsfläche (113) erzeugt wird, wobei die Verbindungsfläche (113) den Klebstoff (161) während des Schrittes des Verbindens der ersten Platte (102) und der zweiten Platte (104) erhält, und wobei optional der Schritt des Fräsens ferner ein Abfräsen eines anderen Teils des Seitenteils (109) der zweiten Platte (104) neben der Verbindungsfläche (113) umfasst, wodurch eine Zwischenfläche (115) erzeugt wird, wobei die Zwischenfläche (115) gegenüber der Verbindungsfläche (113) erhaben ist, wodurch eine Kante zwischen der Zwischenfläche (115) und der Verbindungsfläche (113) erzeugt wird, wobei die Kante den Klebstoff während des Aufbringens des Klebstoffs (161) auf die Verbindungsfläche (113) beschränkt.

11. Verfahren nach einem der vorhergehenden Ansprüche, wobei der Schritt des Fräsens und der Schritt des Verbindens zumindest teilweise gleichzeitig an unterschiedlichen Positionen der Seitenteile (108, 109) durchgeführt werden.

12. Verfahren nach einem der vorhergehenden Ansprüche, wobei der Schritt des Fräsens ferner das Fräsen des Seitenteils (108) der ersten Platte (102) und des Seitenteils (109) der zweiten Platte (104) umfasst, so dass ihre Außenflächen (112, 113, 114, 115) in einem Winkel (d) zwischen 10° und 300° weiter, bevorzugt 30-240° angeordnet sind.

13. Verfahren nach einem der vorhergehenden Ansprüche, wobei der Schritt des Fräsens ferner das Fräsen des Seitenteils (108) der ersten Platte (102) und des Seitenteils (109) der zweiten Platte (104) umfasst, so dass ihre Außenflächen (112, 113, 114, 115) in einem Winkel zwischen 80° und 100°, vorzugsweise etwa 90° angeordnet sind.

14. Verfahren zum Zusammenbau eines Möbelstücks, umfassend die Schritte:
- Bereitstellung eines Möbelstücks (100), das gemäß dem Verfahren nach einem der vorhergehenden Ansprüche hergestellt ist, und
- Ausklappen der ersten Platte (102) und der zweiten Platte (104) derart, dass der auf der ersten Platte (102) aufgebrachte Klebstoff (161) zu dem auf der zweiten Platte (104) aufgebrachten Klebstoff (161) zeigt.

## Revendications

1. Procédé de fabrication d'un élément de meuble (100) comprenant un premier panneau (102) de meuble et au moins un deuxième panneau (104) de meuble, ledit procédé comprenant les étapes consistant à :
- disposer ledit premier panneau (102) et ledit deuxième panneau (104) adjacents l'un à l'autre de sorte qu'une partie latérale (108) dudit premier panneau (102) soit sensiblement à fleur d'une partie latérale (109) dudit deuxième panneau (104),
- fraiser la partie latérale (108) du premier panneau (102) et la partie latérale (109) du deuxième panneau (104) au moyen d'au moins un outil de fraisage (150) pour former des surfaces d'assemblage (112, 113) des parties latérales respectives (108, 109), et
- assembler la partie latérale (108) du premier panneau (102) et la partie latérale (109) du deuxième panneau (104) par application d'un adhésif (161) aux deux surfaces d'assemblage (112, 113), dans lequel ledit adhésif crée un assemblage formant charnière (105) entre lesdits premier et deuxième panneaux (102, 104), **caractérisé en ce que**
le premier panneau (102a) est assemblé au deuxième panneau (104a) simultanément avec l'assemblage d'un troisième panneau (102b) à un quatrième panneau (104b), les premier et quatrième panneaux (104a, 104b) formant des parties latérales (104, 204, 304) ou des parties supérieure et inférieure (406a, 406b) d'un élément de meuble, les deuxième et troisième panneaux (102a, 102b) formant un élément arrière pliant (102, 302, 402), un premier cordon d'adhésif (161a) assemblant les premier et deuxième panneaux (102a, 104a), et un second cordon d'adhésif (161b) assemblant les troisième et quatrième panneaux (102b, 104b), une zone exempte d'adhésif (111) séparant les premier et second cordons d'adhésif (161a, 161b).

2. Procédé selon la revendication 1, dans lequel l'étape de fraisage consiste à fraiser simultanément la partie latérale (108) dudit premier panneau (102) et la partie latérale (109) dudit deuxième panneau (104).

3. Procédé selon la revendication 1 ou la revendication 2, dans lequel l'étape de fraisage consiste à fraiser la partie latérale (108) dudit premier panneau (102) au moyen d'au moins une première fraise (151a-d) dudit outil de fraisage (150) et à fraiser la partie latérale (109) dudit deuxième panneau (104) au moyen d'au moins une seconde fraise (151a-d) dudit outil de fraisage (150), ladite première fraise (151a-d) fournissant de préférence une action de fraisage qui est différente de l'action de fraisage fournie par la seconde fraise (151ad).

4. Procédé selon la revendication 1, dans lequel l'étape de fraisage consiste à fraiser la partie latérale (108) dudit premier panneau (102) au moyen d'une première fraise, et à fraiser la partie latérale (109) dudit deuxième panneau (104) au moyen d'une seconde fraise.

5. Procédé selon l'une quelconque des revendications précédentes, dans lequel ledit au moins un outil de fraisage (150) est conçu pour parcourir la longueur totale des parties latérales respectives (108, 109) dudit premier panneau (102) et dudit deuxième panneau (104).

6. Procédé selon l'une quelconque des revendications précédentes, dans lequel l'étape d'assemblage du premier panneau (102) et du deuxième panneau (104) consiste à assembler la partie latérale (108) du premier panneau (102) et la partie latérale (109) du deuxième panneau (104) au moyen d'un outil d'assemblage (160) appliquant ledit adhésif (161) au moins autour d'une zone d'assemblage (110) des parties latérales (108, 109) dudit premier panneau (102) et dudit deuxième panneau (104).

7. Procédé selon la revendication 6, dans lequel ledit outil d'assemblage (160) applique ledit adhésif (161) sensiblement sur toute la longueur des parties latérales (108, 109) dudit premier panneau (102) et dudit deuxième panneau (104).

8. Procédé selon l'une quelconque des revendications précédentes, dans lequel ledit adhésif (161) comprend de la colle, de préférence une colle fondue, telle qu'un type réactif de colle fondue ou un type thermoplastique de colle fondue.

9. Procédé selon l'une quelconque des revendications précédentes, dans lequel l'étape de fraisage consiste à découper une partie de la partie latérale (108) dudit premier panneau (102) autour d'une zone d'assemblage (110) créant une surface d'assemblage (112), dans lequel ladite surface d'assemblage (112) reçoit ledit adhésif (161) pendant l'étape d'assemblage du premier panneau (102) et du deuxième panneau (104) et, éventuellement, dans lequel l'étape de fraisage consiste en outre à fraiser une autre partie de la partie latérale (108) dudit premier panneau (102) à proximité de la surface d'assemblage (112), créant une surface intermédiaire (114), dans lequel ladite surface intermédiaire (114) est surélevée par rapport à la surface d'assemblage (112), créant ainsi un bord entre la surface intermédiaire (114) et la surface d'assemblage (112), ledit bord confinant l'adhésif (161) à la surface d'assemblage (112) pendant l'application de l'adhésif.

10. Procédé selon l'une quelconque des revendications précédentes, dans lequel l'étape de fraisage consiste à découper une partie de la partie latérale (109) dudit deuxième panneau (104) autour d'une zone d'assemblage (110) créant une surface d'assemblage (113), dans lequel ladite surface d'assemblage (113) reçoit ledit adhésif (161) pendant l'étape d'assemblage du premier panneau (102) et du deuxième panneau (104) et, éventuellement, dans lequel l'étape de fraisage consiste en outre à fraiser une autre partie de la partie latérale (109) dudit deuxième panneau (104) à proximité de la surface d'assemblage (113), créant une surface intermédiaire (115), dans lequel ladite surface intermédiaire (115) est surélevée par rapport à la surface d'assemblage (113) créant ainsi un bord entre la surface intermédiaire (115) et la surface d'assemblage (113), ledit bord confinant l'adhésif à la surface d'assemblage (113) pendant l'application de l'adhésif (161).

11. Procédé selon l'une quelconque des revendications précédentes, dans lequel l'étape de fraisage et l'étape d'assemblage sont mises en œuvre au moins partiellement simultanément à des positions différentes des parties latérales (108, 109).

12. Procédé selon l'une quelconque des revendications précédentes, dans lequel l'étape de fraisage consiste en outre à fraiser la partie latérale (108) dudit premier panneau (102) et la partie latérale (109) dudit deuxième panneau (104) de sorte que leurs surfaces extérieures (112, 113, 114, 115) soient disposées à un angle (α) compris entre 10° et 300°, de préférence entre 30° et 240°.

13. Procédé selon l'une quelconque des revendications précédentes, dans lequel l'étape de fraisage consiste en outre à fraiser la partie latérale (108) dudit premier panneau (102) et la partie latérale (109) dudit deuxième panneau (104) de sorte que leurs surfaces extérieures (112, 113, 114, 115) soient disposées à un angle (α) compris entre 80° et 100°, de préférence d'environ 90°.

14. Procédé d'assemblage d'un élément de meuble, comprenant les étapes consistant à :
- utiliser un élément de meuble (100) fabriqué conformément au procédé selon l'une quelconque des revendications précédentes, et
- déplier ledit premier panneau (102) et ledit deuxième panneau (104) de sorte que ledit adhésif (161) appliqué sur le premier panneau (102) fasse face à l'adhésif (161) appliqué sur le deuxième panneau (104).
